Europäisches Patentamt

European Patent Office

Office européen des brevets

(19)

(11) Numéro de publication: **0 125 973**

**B2**

(12) **NOUVEAU FASCICULE DE BREVET EUROPEEN**

(45) Date de publication du nouveau fascicule du brevet: **09.01.91**

(51) Int. Cl.⁵: **C 04 B 7/43**, B 01 J 8/18

(21) Numéro de dépôt: **84400883.9**

(22) Date de dépôt: **02.05.84**

(54) Installation de traitement thermique de minéraux sous forme pulvérulente.

(30) Priorité: **10.05.83 FR 8307754**

(43) Date de publication de la demande:
**21.11.84 Bulletin 84/47**

(45) Mention de la délivrance du brevet:
**23.07.86 Bulletin 86/30**

(45) Mention de la decision concernant l'opposition:
**09.01.91 Bulletin 91/02**

(84) Etats contractants désignés:
**DE GB IT**

(56) Documents cités:
**EP-A-0 065 436**
**DE-A-2 350 768**
**US-A-3 235 239**

(73) Titulaire: **FIVES-CAIL BABCOCK, Société anonyme**
**7 rue Montalivet**
**F-75383 Paris Cédex 08 (FR)**

(72) Inventeur: **Lebesgue, Jean**
**37, résidence Petit Bel Ebat**
**F-77210 Avon (FR)**

(74) Mandataire: **Fontanié, Etienne**
**FIVES-CAIL BABCOCK 38, rue de la République**
**F-93107 Montreuil Cédex (FR)**

Courier Press, Leamington Spa, England.

## Description

La présente invention a pour objet une installation pour le traitement thermique de minéraux réduits en poudre dans laquelle le préchauffage, le traitement thermique proprement dit et le refroidissement des produits sont effectués par échange de chaleur entre des courants de gaz et les produits en suspension dans ces derniers.

Une telle installation est constituée par un four où les produits préalablement réchauffés sont traités en suspension dans un courant de gaz chauds produits par la combustion d'air et d'un combustible injecté dans le four, et par deux groupes de séparateurs, généralement des cyclones à axe vertical, placés respectivement en amont et en aval du four et reliés entre eux et au four par des conduites agencées de telle sorte que les gaz d'échappement du four passent successivement dans tous les cyclones du premier groupe tandis qu'un courant d'air traverse tous les cyclones du second groupe avant de pénétrer dans le four où il est utilisé comme air de combustion. Les échanges thermiques entre les produits à traiter et les gaz d'échappement du four, d'une part, et entre les produits traités et l'air, d'autre part, se font en partie dans les cyclones et en partie dans les conduits où les produits sont mis en suspension dans les gaz qui y circulent et entraînés jusqu'aux cyclones; dans ces derniers, les produits sont séparés du courant gazeux pour être remis en suspension, dans une partie amont du circuit des gaz, de façon à réaliser globalement des échanges à contrecourant.

Dans les installations connues de ce type, les cyclones du premier groupe constituant le préchauffeur, le four et les cyclones du second groupe constituant le refroidisseur sont superposés pour permettre le transfert des produits par gravité entre les étages successifs du préchauffeur et le four et entre le four et le refroidisseur. Cette disposition conduit à un ensemble de grande heuteur nécessitant une charpente support en forme de tour très importante et par conséquent coûteuse surtout lorsqu'il faut tenir compte des risques de séismes ou de vents forts dans le calcul de ces charpentes.

Pour remédier à cet inconvénient on a proposé de placer tous les cyclones, et éventuellement le four, au même niveau en les reliant par des conduites en U dont la partie coudée est située au-dessous du niveau de la pointe des cyclones. Une telle installation a un encombrement au sol très important et comporte des grandes longueurs de conduite sand utilité pour les échanges thermiques qui se produisent, en dehors des cyclones, uniquement dans la partie ascendante des conduites de liaison en U.

Le but de la présente invention est de réaliser une installation de ce type qui ait une faible hauteur et dont l'encombrement au sol ne soit pas supérieur à celui des installations en forme de tour classiques.

L'installation objet de la présente invention est caractérisée en ce que le four et les deux cyclones situés respectivement immédiatement en amont et en aval du four sont placés à un niveau inférieur et supportés par la charpente tandis que les autres cyclones du premier groupe sont placés à un niveau supérieur et supportés par une superstructure fixée sur la charpente, les autres cyclones du second groupe étant placés au même niveau que l'ensemble constitué par le four et les deux cyclones aval et amont.

Par niveau inférieur, il faut entendre un niveau aussi bas que possible, et compatible avec l'évacuation des produits à la pointe des cyclones et avec l'entrée des gaz et/ou des produits à traiter dans le four ou leur évacuation lorsqu'elles s'effectuant par le bas du four.

Etant donné que le four et les deux cyclones situés respectivement en amont et en aval de celui-ci sont briquetés ou garnis d'un béton réfractaire leur poids est élevé et en les plaçant à un niveau plus bas que dans les installations classiques on réduit notablement la hauteur et par conséquent le coût de la charpente qui les supporte. Les autres cyclones qui sont traversés par de l'air ou des gaz d'échappement du four à températures plus basses ne sont pas garnis d'un revêtement réfractaire et sont beaucoup plus légers.

De préférence, le dernier cyclone du refroidisseur sera situé à une hauteur suffisante pour permettre l'alimentation directe, par gravité, d'un refroidisseur complémentaire, d'un transporteur d'évacuation, d'un poste de chargement, etc.

D'autres caractéristiques de l'invention apparaîtront à la lecture de la description qui suit et se réfère aux dessins l'accompagnant qui montrent, à titre d'exemple non-limitatif, un mode de réalisation de l'invention et sur lesquels:

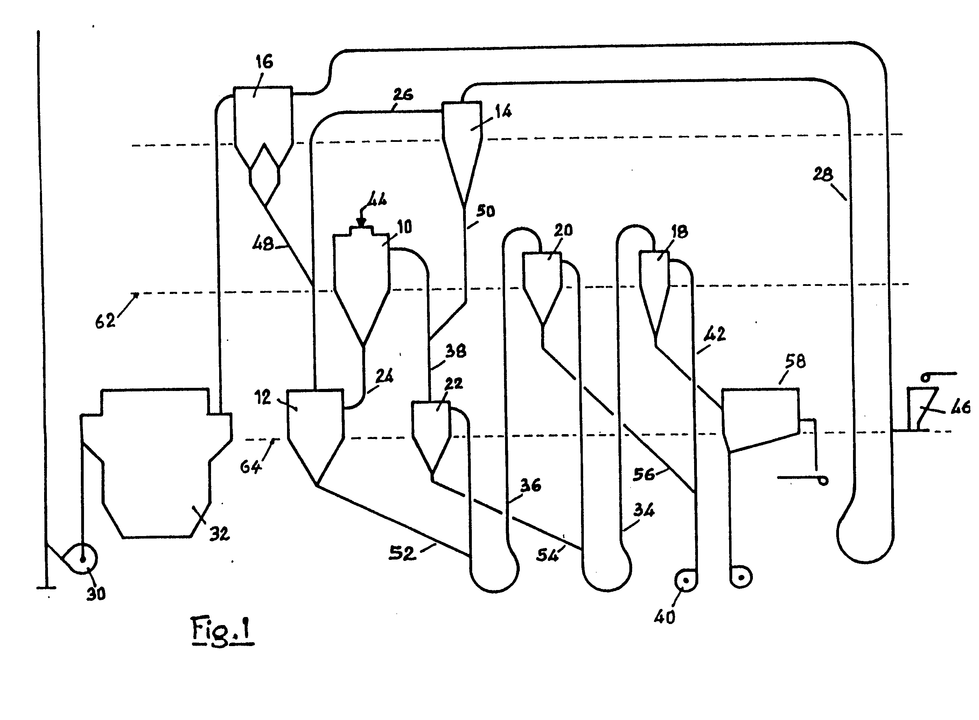

La figure 1 est le schéma d'une installation de calcination réalisée conformément à l'invention;

La figure 2 est une vue en élévation de l'installation;

La figure 3 et une autre vue en élévation, suivant la flèche F de la figure 2, de cette installation, et

La figure 4 est une vue de dessus de l'installation.

L'installation représentée sur les dessins comprend un four de calcination en suspension 10, un premier groupe de cyclones 12, 14, 16 et un second groupe de cyclones 18, 20 et 22.

Les cyclones du premier groupe sont reliés entre eux et au four 10 par des conduites 24, 26 et 28 de telle sorte que les gaz d'échappement du four traversent successivement les cyclones 12, 14 et 16, dans cet ordre, en passant par ces conduites. A la sortie du cyclone 16, les gaz aspirés par un ventilateur 30 traversant un filtre de dépoussiérage 32 et sont rejetés à l'atmosphère.

Les cyclones du second groupe sont reliés entre eux et au four par des conduites 34, 36 et 38 de telle sorte que de l'air insufflé par un ventilateur 40 dans une conduite 42 reliée à l'entrée du cyclone 18 traverse successivement les trois cyclones de ce groupe avant de pénétrer dans le four où il est utilisé comme air de combustion pour brûler un combustible injecté par une tuyère 44.

Un dispositif d'alimentation 46 permet d'introduire les produits à traiter dans la conduite 28 où ils sont mis en suspension dans les gaz et entraînés jusqu'au cyclone 16. Dans celui-ci, les produits sont séparés des gaz et collectés dans sa partie inférieure d'où ils sont évacués par gravité au moyen d'un tuyau 48 reliant la pointe du cyclone à la conduite 26. Dans cette dernière, les produits sont remis en suspension dans les gaz et entraînés jusqu'au cyclone 14. Ils sont ensuite séparés du courant gazeux et dirigés vers la conduit 38 par un tuyau 50. L'air circulant dans la conduite 38 entraîne dans le four 10 les produits qui ont été réchauffés par les gaz d'échappement circulant dans les conduits 26 et 28 et les cyclones 14 et 16. Dans le four, les produits sont maintenus en suspension dans le courant d'air et sont calcinés grâce à la chaleur fournie par la combustion de l'air et du combustible injecté par la tuyère 44.

Les gaz de combustion s'échappent à la partie inférieure du four, en entraînant les produits calcinés, et sont amenés par la conduite 24 dans le cyclone 12. Les produits calcinés séparés des gaz d'échappement dans le cyclone 12 sont introduits dans la conduite 36 au moyen d'un tuyau 52 reliant cette dernière à la pointe du cyclone 12, et passant successivement dans le cyclone 22, le tuyau 54, la conduite 34, le cyclone 20 le tuyau 56, la conduite 42 et le cyclone 18. Sur ce trajet, les produits calcinés rencontrent de l'air de plus en plus frais qui abaisse leur température. A la sortie dy cyclone 18, les produits calcinés peuvent subir un refroidissement supplémentaire dans un refroidisseur 58 et être ensuite dirigés vers des aires de stockage ou des postes de chargement.

Conformément à l'invention, le four 10 et les cyclones 12 et 22, qui sont revêtus d'un garnissage réfractaire parce qu'ils sont traversés par des gaz à haute température et qui, par conséquent, sont très lourds, sont disposés à des niveaux aussi bas que possible pour réduire l'importance de la charpente qui les supporte. Les positions des cyclones 12 et 22 doivent être telles qu'elles permettent l'écoulement par gravité des produits calcinés dans les tuyaux 52 et 54, et le four 10 dont la sortie se trouve à l'extrémité inférieure doit être placé au-dessus du cyclone 12 pour réduire la longueur de la conduite 24.

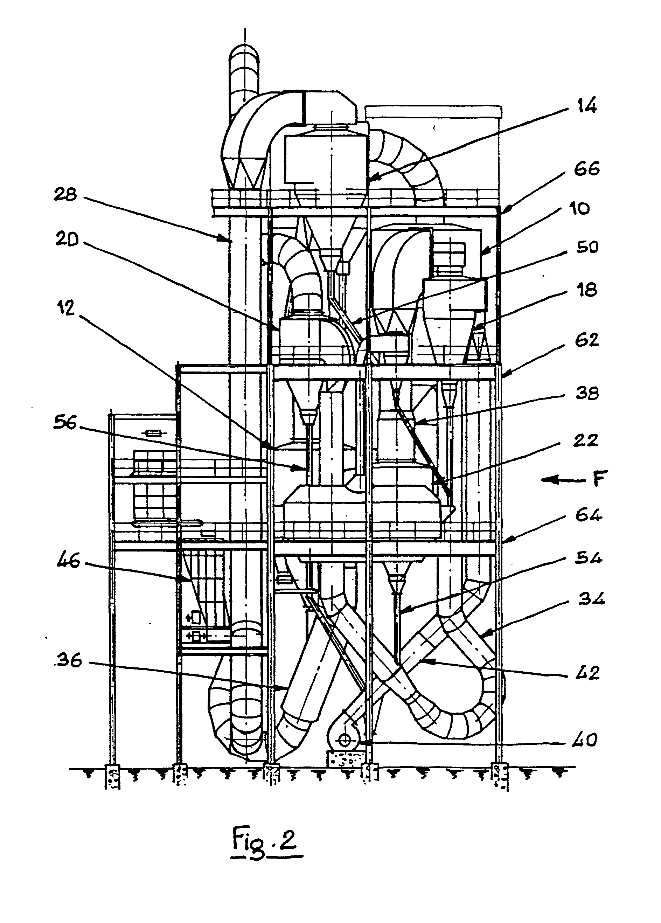

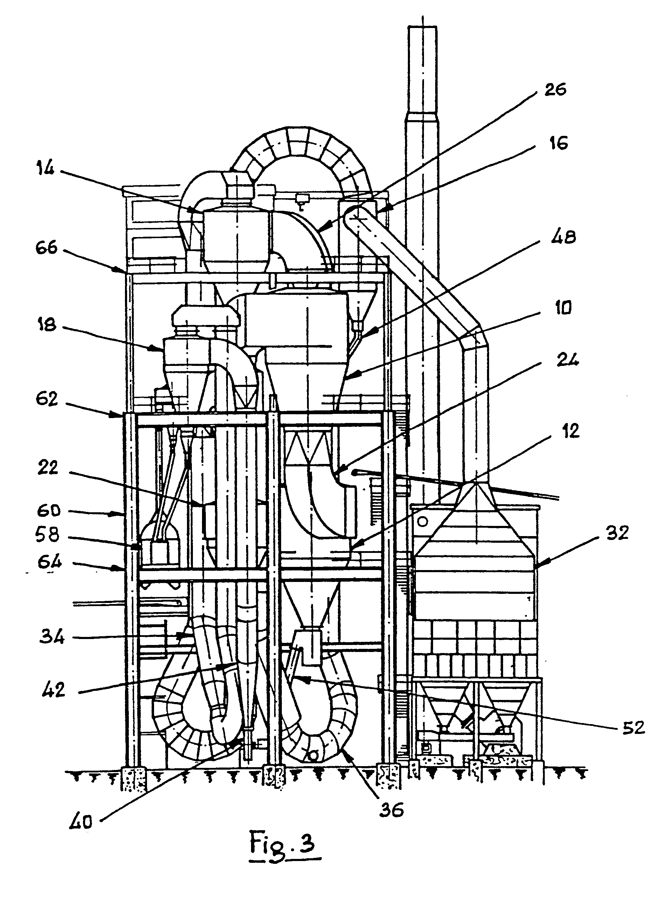

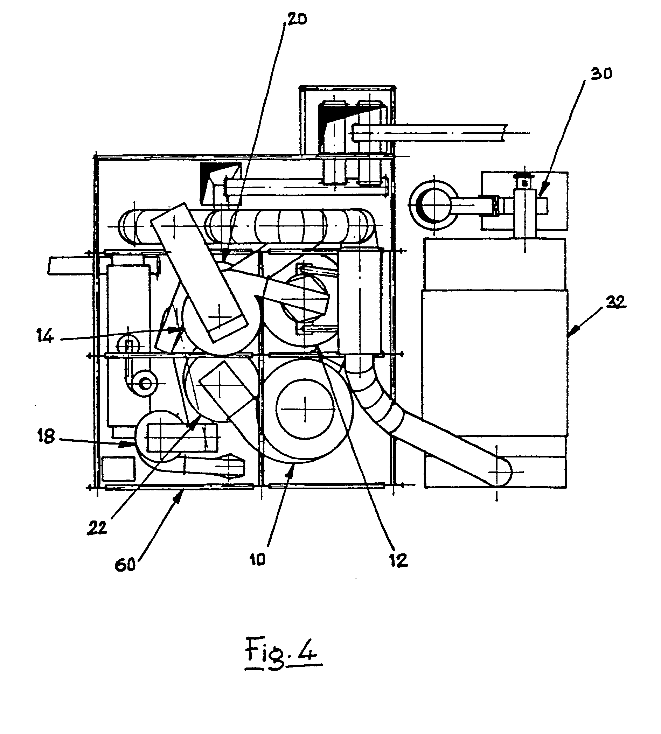

Comme on le voit sur les figures 2 à 4, les cyclones 12 et 22 et le four 10 sont supportés par une charpente de faible hauteur 60 comprenant un plancher supérieur 62 et un plancher inférieur 64. Les cyclones 12 et 22 sont montés sur le plancher 64, tandis que le four est monté sur le plancher 62. Les cyclones 18 et 20 sont également montés sur le plancher 62, tandis que les cyclones 14 et 16 sont montés sur une superstructure 66, fixée sur la charpente 60. Cette superstructure est beaucoup plus légère que la charpente car les cyclones 14 et 16 qui sont traversés par des gaz déjà refroidis ne comportent pas de garnissage réfractaire et sont donc relativement légers.

Cette disposition des cyclones et du four conduit à un ensemble très compact de faible hauteur et dont l'encombrement au sol est très faible comme un peut s'en rendre compte sur les figures 2 à 4. Par rapport à une installation classique avec cyclones et four superposés, le poids de la charpente est diminué d'environ 40%. La disposition décrite implique l'utilisation de conduites 34 et 36 en forme de U. On pourrait supprimer ou du moins réduire la partie de ces conduites inutilisée pour les échanges thermiques en plaçant les cyclones 18 et 20 à un niveau inférieur.

Pour pouvoir placer le dispositif d'alimentation 46 à faible hauteur, on a également donné une forme de U à la conduite 28 reliant les cyclones 14 et 16. Cette disposition a également l'avantage de permettre un meilleur épuisement de la chaleur des gaz. Mais elle n'est pas obligatoire et on pourrait s'en dispenser en plaçant l'alimentation à la partie supérieure de la charpente ou de la superstructure.

De nombreuses modifications peuvent être apportées à la disposition décrite, notamment en fonction de la structure du four, sans sortir du cadre de l'invention. Par exemple, si le four comporte une entrée à son extrémité inférieure et une sortie à son extrémité supérieure, les positions du four et du cyclone placé à la sortie pourront être inversées, le four étant disposé plus bas ou au même niveau que le cyclone.

**Revendications**

1. Installation pour le traitement thermique au moyen de gaz de produits minéraux sous forme pulvérulente comportant une charpente, un four (10) où les produits sont traités en suspension dans un courant de gaz chauds produits par la combustion d'air et d'un combustible et deux groupes de cyclones placés respectivement en amont et en aval du four et reliés entre eux et au four par des conduites agencés de telle sorte que les gaz d'échappement du four passent successivement dans tous les cyclones (12, 14, 16) du premier groupe tandis qu'un courant d'air traverse tous les cyclones (18, 20, 22) du second groupe avant de pénétrer dans le four où il est utilisé comme air de combustion, les gaz d'échappement servant à chauffer les produits avant leur entrée dans le four et le courant d'air servant à refroidir les produits traités, caractérisée en ce que le four (10) et les deux cyclones (12, 22) situés respectivement immédiatement en amont et immédiatement en aval du four sont placés à un niveau inférieur et supportés par ladite charpente (60) tandis que les autres cyclones (14, 16) du premier groupe sont placés à un niveau supérieur et supportés par une superstructure (66) fixée sur la charpente, les autres cyclones (18, 20) du second groupe étant placés au même niveau que l'ensemble constitué par le four (10) et les deux cyclones aval et amont (12, 22).

2. Installation selon la revendication 1, caractérisée en ce que ladite charpente (60) comporte un plancher supérieur (62) et un plancher inférieur (64) et en ce que le four (10) est monté sur le plancher supérieur tandis que les cyclones (12, 22) situés respectivement immédiatement en amont et immédiatement en aval du four sont montés sur le plancher inférieur.

3. Installation selon la revendication 2, caractérisée en ce que les cyclones (18, 20) du second group sont montés sur le plancher supérieur, tandis que les cyclones (14, 16) du premier groupe sont supportés par ladite superstructure (66).

## Patentansprüche

1. Vorrichtung zur thermischen Behandlung mit Gasen von Mineralien in pulveriger Form, bestehend aus einem Gerüst, einem Ofen (10), in dem die Stoffe in Suspension in einem Strom von Heisgasen behandelt werden, die durch die Verbrennung von Luft und eines Brennstoffes erzeugt werden, und aus zwei Gruppen von Zyklonen, die vor bzw. nach dem Ofen angeordnet sind und miteinander und mit dem Ofen durch Leitungen verbunden werden, die so angeordnet sind, dass die Abase des Ofens nacheinander alle Zyklone (12, 14, 16) der ersten Gruppe durchströmen, während ein Luftstrom alle Zyklone (18, 20, 22) der zweiten Gruppe durchströmt, bevor er in den Ofen eindringt, wo er als Verbrennungsluft benutzt wird, wobei die Abgase zur Erwärmung der Stoffe vor deren Eintritt in den Ofen dienen und der Luftstrom zur Abkühlung der behandelten Stoffe dient, dadurch gekennzeichnet, dass der Ofen (10) und die beiden sich unmittelbar vor bzw. nach dem Ofen befindlichen Zyklone (12, 22) auf einem unteren Niveau angeordnet sind und durch das Gerüst (60) getragen werden, während die anderen Zyklone (14, 16) der ersten Gruppe auf einem höheren Niveau angeordnet sind und durch einen auf dem Gerüst befestigten Oberbau (66) getragen werden, wobei die anderen Zyklone (18, 20) der zweiten Gruppe auf demselben Niveau wie die vom Ofen (10) und den beiden ein- bzw. auslaufseitigen Zyklonen (12, 22) gebildete Einheit aufgestellt sind.

2. Vorrichtung nach Anspruch 1, dadurch gekennzeichnet, dass das Gerüst (60) einen höheren Boden (62) und einen unteren Boden (64) umfasst, und dass der Ofen (10) auf dem höheren Boden aufgestellt ist, während die unmittelbar vor und nach dem Ofen angeordneten Zyklone auf dem unteren Boden aufgestellt sind.

3. Vorrichtung nach Anspruch 2, dadurch gekennzeichnet, dass die Zyklone (18, 20) der zweiten Gruppe auf den höheren Boden aufgestellt sind, während die Zyklone (14, 16) der ersten Gruppe durch den Oberbau (66) getragen werden.

## Claims

1. Installation for the heat treatment, by gases, of minerals in pulverant form, comprising a frame, a kiln (10) in which the materials are treated in suspension in a flow of hot gases produced by air and fuel combustion and two sets of cyclones respectively located upstream and downstream of the kiln and connected to each other and to the kiln by pipes arranged in such a way that the exhaust gases from the kiln flow in succession through all the cyclones (12, 14, 16) of the first set while a current of air crosses all the cyclones (18, 20, 22) of the second set before entering the kiln where it is used as combustion air, the exhaust gases being used to heat the materials before they enter the kiln and the air current being used to cool the treated materials, characterized by the fact that the kiln (10) and the two cyclones (12, 22) respectively located immediately upstream and immediately downstream of the kiln are placed at a lower level and supported by the said frame (60) while the other cyclones (14, 16) of the first set are located at a high level and supported by a superstructure (66) fixed to the frame, the other cyclones (18, 20) of the second set being placed at the same level as the assembly constituted by the kiln (10) and the two downstream and upstream cyclones (12, 22).

2. Installation according to claim 1, characterized by the fact that the said frame (60) has an upper floor (62) and a lower floor (64) and by the fact that the kiln (10) is mounted on the upper floor while the cyclones (12, 22) respectively located immediately upstream and immediately downstream of the kiln are mounted on the lower floor.

3. Installation according to claim 2, characterized by the fact that the cyclones (18, 20) of the second set are mounted on the upper floor, while the cyclones (14, 16) of the first set are supported by the said superstructure (66).

Fig.1

Fig.2

Fig.3

Fig.4